# EUROPEAN PATENT APPLICATION

(11) **EP 4 517 450 A1**
(43) Date of publication of application: **05.03.2025**
(21) Application number: 23194156.8
(22) Date of filing: 30.08.2023
(51) Int. Cl.: G05B 9/02, G05B 19/048, H02P 27/04

(54) **AN INPUT/OUTPUT FACILITY ARRANGEMENT IN AN ELECTRIC LOGIC CONTROL DEVICE AND AN ELECTRIC LOGIC CONTROL DEVICE**

(71) Applicant: ABB Schweiz AG, 5400 Baden (CH)
(72) Inventor: Alasaari, Pekka, 00380 Helsinki (FI); Havanto, Petri, 00380 Helsinki (FI)
(74) Representative: Kolster Oy Ab

(57) **Abstract**

The invention relates to the field of electric logic control devices and electric machines, such as electric motors and electric generators for industrial applications, and more particularly to an input/output facility arrangement in an electric logic control device and to an electric logic control device. The an input/output facility arrangement (20, 30, 40, 50, 60, 70, 100) in an electric logic control device, said arrangement comprising a digital input/output connection (11, 41, 51) arranged both for safety related input/output and for non-safety related input/output, a non-safety logic controller module (13) and a safety logic controller module (12) or a safety logic interface (61), wherein said safety logic controller module (12) or said optional safety logic controller module (62) is configured to communicate signalling to/from said digital input/output connection (11, 41, 51), and said digital input/output connection (11, 41, 51) comprises an isolation between said non-safety logic controller module (13) and said safety logic controller module (12) or said optional safety logic controller module (62).

## Description

### FIELD OF THE INVENTION

The present invention relates to the field of electric logic control devices and electric machines, such as electric motors and electric generators for industrial applications, and more particularly to an input/output facility arrangement in an electric logic control device and to an electric logic control device.

### BACKGROUND OF THE INVENTION

Electric logic control devices are industrial computer devices adapted for the control of industrial devices and industrial processes, such as manufacturing process machines, assembly lines, robots, and different kinds of electric machines. An electric drive device is one example an electric logic control device.

Electric drive devices are used in industry for different applications, such as for driving motors within the transportation industry, for driving different devices within the process and manufacturing industry as well as within the energy industry. There are applications commonly used for electric drive devices within the transportation industry for example in metro and railway traffic applications as well as in ship propulsion unit applications of the marine industry. Within the energy industry, electric drive devices can be used for example as electric drives for wind turbines of the wind power industry.

Electric drive devices for electric machines, such as for electric motors and electric generators, may be divided into DC drives (DC, direct current) and AC drives (AC, alternating current). E.g. in a DC motor of a DC drive, a magnetic field is generated by the current through the field winding in the stator. This magnetic field is always maintained at right angles to the field generated by the armature winding. In this way, a DC motor's torque is generated, which torque can then be easily controlled in a DC drive by changing the armature current and keeping the magnetizing current constant. In a DC drive, also the DC motor speed can be controlled directly through armature current.

Within electric drives, the AC drives may further be divided into frequency-controlled AC drives, flux-vector-controlled AC drives and into AC drives utilising direct torque control (DTC, Direct Torque Control). In flux-vector-controlled AC drives and in direct torque control AC drives the torque of the three-phase motor or generator can be controlled, whereas in frequency controlled AC drives the driven/driving machine dictates the torque level.

Functional safety is part of the overall safety of a system or device that depends on automatic safeguards put in place to respond to a potentially dangerous situation. To ensure the safety of electric machines and those who operate them, safety measures are needed. Electric logic control devices that provide safety functions will not only detect the risk but, additionally, take preventive action to decrease the risk.

Functional safety of electric logic control devices is regulated in standardization with a number of appropriate standards and norms. For example, functional safety requirements applicable to machinery safety-related electrical control systems are provided in an IEC standard EN 62061 (IEC, International Electrotechnical Commission).

In standardization there is a requirement of that the NSR functions (NSR, not safety related) shall be prevented of obstructing the SR functions (SR, safety related). This is typically implemented by having fully separated signals. Currently, in a typical electric logic control device e.g. in a frequency converter the inputs of the SR outputs and the inputs of the NSR outputs are implemented separately.

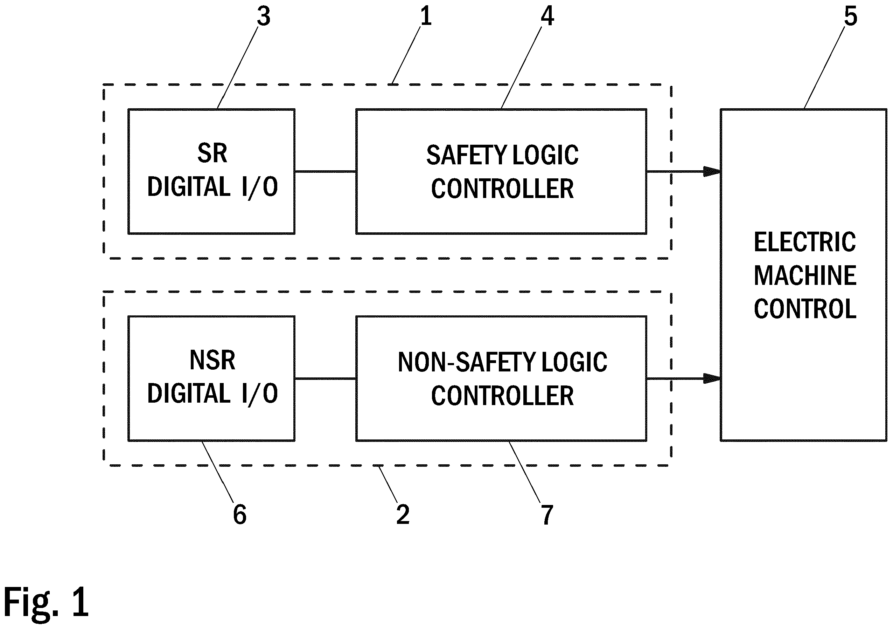

In the following, prior art will be described with reference to the accompanying Figure 1, which shows an input/output facility arrangement in an electric logic control device according to the prior art.

Figure 1 shows an input/output facility arrangement in an electric logic control device according to the prior art. In the presented prior art arrangement there is a safety related input/output facility 1 and a non-safety related input/output facility 2. Said safety related input/output facility 1 comprises a safety related digital input/output connection 3 (SR DIGITAL I/O) further connected to a safety logic controller module 4. Said safety logic controller module 4 comprises a safety logic together with a safety level controller, i.e. an FS MCU (FS MCU, Functional Safety Microcontroller Unit). Said safety related input/output facility 1 is fully separated from said non-safety related input/output facility 2. Said safety logic controller module 4 provides safety related electric machine control 5 for controlling of the electric machine.

Said non-safety related input/output facility 2 comprises a non-safety related digital input/output connection 6 (NSR DIGITAL I/O) further connected to a non-safety logic controller module 7. Said non-safety logic controller module 7 comprises a non-safety logic together with a non-safety level controller, i.e. an MCU (MCU, Microcontroller Unit). Said non-safety related input/output facility 2 is fully separated from said safety related input/output facility 1. Said non-safety logic controller module 7 provides non-safety related electric machine control 5 for controlling of the electric machine.

In many electric logic control devices, e.g. particularly in small frequency converters, the area available for the input/output devices i.e., I/O devices, is very limited. In an exemplary small frequency converter, there is just enough space reserved for regular cable connectors and for option modules, this leaving no space for additional cable connections. In this exemplary configuration, the adding of any additional safety related (SR) functionality to said exemplary small frequency converter also requires implementing the related I/O cable connectors which in turn leads to increasing the size of the exemplary small frequency converter. So, if additional SR functionality is added to the device, the implementing of the related I/O poses a problem.

There is a significant drawback with prior art solutions in regard to flexibility of input/output facility in an electric logic control device.

In today's demanding environment, there is a need for a more effective and elegant solution for an input/output facility arrangement in an electric logic control device, which would provide an electric logic control device with an advanced, flexible, and reliable input/output facility.

There is a demand in the market for an electric logic control device that would have an advanced, flexible, and reliable input/output facility compared to the current prior art solutions.

### BRIEF DESCRIPTION OF THE INVENTION

The object of the invention is to introduce an input/output facility arrangement in an electric logic control device, which would provide an electric logic control device with an advanced, flexible, and secure input/output facility. Advantageous embodiments are furthermore presented.

It is brought forward a new input/output facility arrangement in an electric logic control device, said arrangement comprising: a digital input/output connection being arranged both for safety related input/output and for non-safety related input/output, a non-safety logic controller module connected to and configured to communicate signalling to/from said digital input/output connection, said non-safety logic controller module being configured to provide the non-safety related electric machine control for an electric machine being controlled by said electric logic control device, and a safety logic controller module or a safety logic interface connected to said digital input/output connection, said safety logic interface is configured to receive an optional safety logic controller module, wherein: said safety logic controller module or said optional safety logic controller module is configured to communicate signalling to/from said digital input/output connection, and configured to provide the safety related electric machine control for an electric machine being controlled by said electric logic control device; and said digital input/output connection comprises an isolation between the digital input/output information from said non-safety logic controller module and the digital input/output information from said safety logic controller module or from said optional safety logic controller module.

In a preferred embodiment, said arrangement comprises an optional safety logic controller module connected to said safety logic interface.

In a preferred embodiment, said isolation comprises an isolator.

In a preferred embodiment, said digital input/output is buffered.

In a preferred embodiment, said digital input/output is buffered with the help of two diodes connected to said digital input/output connection.

In a preferred embodiment, said input/output facility arrangement comprises data isolation, wherein the digital output signals from said non-safety logic controller module and from said safety logic controller module or from said optional safety logic controller module are combined with an AND-operator, and wherein the signalling from said safety logic controller module and the signalling from said non-safety logic controller module is configured so that when a port is configured to be used by one of said safety logic controller module or said non-safety logic controller module, a pin corresponding to said port is configured to a `high' state by the other of said safety logic controller module or said non-safety logic controller module, or respectively wherein the signalling from said optional safety logic controller module and the signalling from said non-safety logic controller module is configured so that when a port is configured to be used by one of said optional safety logic controller module or said non-safety logic controller module, a pin corresponding to said port is configured to a 'high' state by the other of said optional safety logic controller module or said non-safety logic controller module.

Furthermore, it is brought forward a new electric logic control device comprising an input/output facility of the invention.

In a preferred embodiment, said electric logic control device is a frequency converter.

Furthermore, it is brought forward a new optional safety logic controller module being configured to be connected to a safety logic interface of an electric logic control device of the invention.

In a preferred embodiment of said electric logic control device, said electric logic control device is a printed circuit board connectable to said safety logic interface.

### BRIEF DESCRIPTION OF THE DRAWINGS

In the following, the present invention will be described in more detail by way of example and with reference to the attached drawings, in which:
Figure 1 illustrates an input/output facility arrangement in an electric logic control device according to the prior art.
Figure 2 illustrates an embodiment of an input/output facility arrangement in an electric logic control device according to the present invention.
Figure 3 illustrates an embodiment of digital input signalling of an input/output facility arrangement in an electric logic control device according to the present invention.
Figure 4 illustrates an embodiment of digital output signalling of an input/output facility arrangement in an electric logic control device according to the present invention.
Figure 5 illustrates another embodiment of digital input signalling of an input/output facility arrangement in an electric logic control device according to the present invention.
Figure 6 illustrates another embodiment of digital output signalling of an input/output facility arrangement in an electric logic control device according to the present invention.
Figure 7 illustrates another embodiment of an input/output facility arrangement in an electric logic control device according to the present invention.

The foregoing aspects, features and advantages of the invention will be apparent from the drawings and the detailed description related thereto.

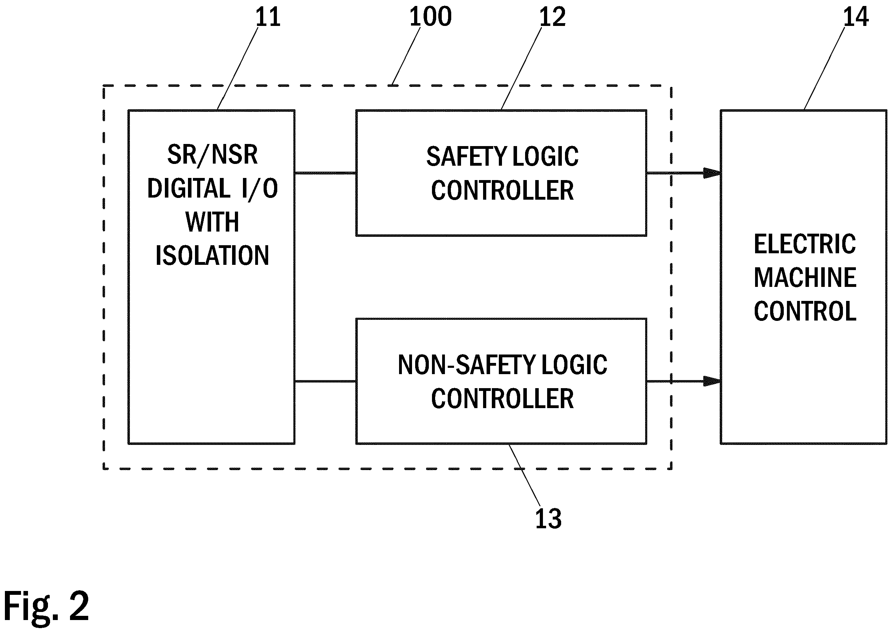

The prior art drawing of Figure 1 has been presented earlier. In the following, the invention will be described in greater detail by means of preferred embodiments with reference to the accompanying drawings of Figures 2 to 7.

### DETAILED DESCRIPTION

The an input/output facility arrangement in an electric logic control device according to one embodiment of the present invention comprises an input/output facility arrangement in an electric logic control device, said arrangement comprising: a digital input/output connection being arranged both for safety related input/output and for non-safety related input/output, a non-safety logic controller module connected to and configured to communicate signalling to/from said digital input/output connection, said non-safety logic controller module being configured to provide the non-safety related electric machine control for an electric machine being controlled by said electric logic control device, and a safety logic controller module or a safety logic interface connected to said digital input/output connection, said safety logic interface is configured to receive an optional safety logic controller module, wherein: said safety logic controller module or said optional safety logic controller module is configured to communicate signalling to/from said digital input/output connection, and configured to provide the safety related electric machine control for an electric machine being controlled by said electric logic control device; and said digital input/output connection comprises an isolation between the digital input/output information from said non-safety logic controller module and the digital input/output information from said safety logic controller module or from said optional safety logic controller module.

When referring to the term "input/output facility arrangement", in this application it is meant to refer to a regular I/O interface of an electric logic control device.

When referring to the term "digital input/output connection", in this application it is meant to refer to a regular digital I/O interface connection of an electric logic control device.

When referring to the term "non-safety logic controller module", in this application it is meant to refer to a regular controller unit module suited for controlling and communicating non-safety logic information, said module comprising a non-safety logic together with a standard non-safety level controller unit.

When referring to the term "safety logic controller module", in this application it is meant to refer to a controller unit module suited for controlling and communicating non-safety logic information, said module comprising a safety logic together with a safety level controller unit. Said safety logic controller module is typically integrated to the electric logic control device as an integrated module. Respectively, the term "optional safety logic controller module" is meant to refer to a safety logic controller module which can be complemented to an electric logic control device as an add-on module. Respectively, the term "safety logic interface" is meant to refer to an interface of an electric logic control device onto which an optional safety logic controller module can be connected to.

When referring to the term "electric machine control", in this application it is meant to refer to a control signalling typically communicated by an electric logic control device, typically by a controller unit of the electric logic control device.

Figure 2 illustrates an embodiment of an input/output facility arrangement in an electric logic control device according to the present invention. The presented embodiment comprises an input/output facility 100 comprising a digital input/output connection with isolation 11 both for the safety related input/output and for the non-safety related input/output. Said input/output facility 100 of an electric logic control device also comprises a safety logic controller module 12 and a non-safety logic controller module 13. Said digital input/output connection with isolation 11 is further connected to said safety logic controller module 12. Said safety logic controller module 12 comprises a safety logic together with a safety level controller, i.e. an FS MCU (FS MCU, Functional Safety Microcontroller Unit). Said safety logic controller module 12 provides the safety related electric machine control 14 for the electric machine being controlled by said electric logic control device.

Said digital input/output connection with isolation 11 is also further connected to said non-safety logic controller module 13. Said non-safety logic controller module 13 comprises a non-safety logic together with a non-safety level controller, i.e. an MCU (MCU, Microcontroller Unit). In the presented embodiment said input/output facility 100 comprises both said safety logic controller module 12 and said non-safety logic controller module 13 as an integrated entity.

In said digital input/output connection with isolation 11 the isolation is arranged so that the isolation provides a separation between said non-safety logic controller module 13 and said safety logic controller module 12. In said digital input/output connection with isolation 11 the isolation is arranged so that the digital input/output information from said non-safety logic controller module 13 cannot affect the safety logic of said safety logic controller module 12. Said non-safety logic controller module 13 provides the non-safety related electric machine control 14 for the electric machine being controlled by said electric logic control device.

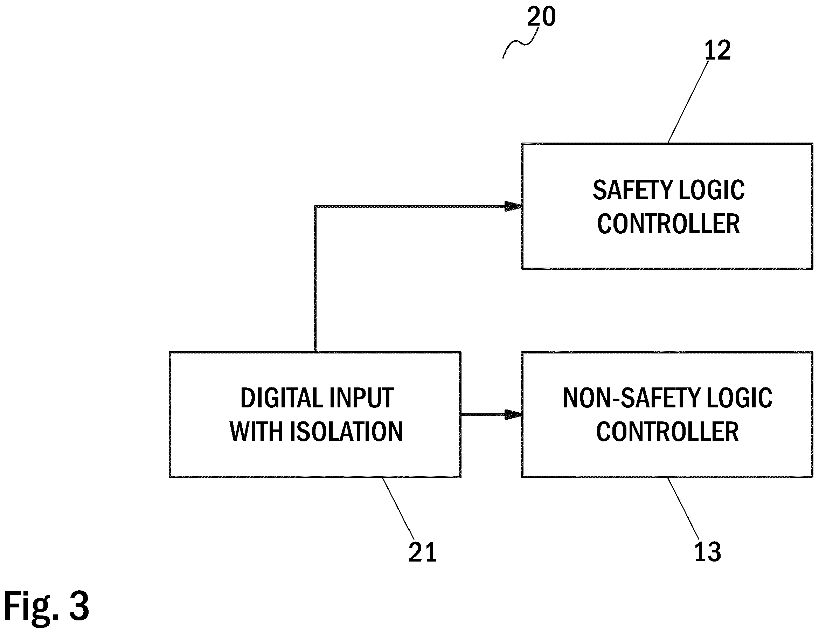

Figure 3 illustrates an embodiment of digital input signalling of an input/output facility arrangement in an electric logic control device according to the present invention. The presented embodiment of digital input signalling of an input/output facility 20 of an electric logic control device comprises a digital input connection with isolation 21. Said digital input connection with isolation 21 drives the input signal both to a safety logic controller module 12 and to a non-safety logic controller module 13.

In the presented embodiment the digital input connection with isolation 21 is buffered. Furthermore, in the presented embodiment the isolation is carried out by implementing the signal paths so that the buffer is always 'stronger' than the either of the safety logic controller module 12 input/output or the non-safety logic controller module 13 input/output when observed from the input of the other one of the safety logic controller module 12 and the non-safety logic controller module 13. In the presented embodiment the isolation guarantees that neither of the safety logic controller module 12 and the non-safety logic controller module 13 can modify the value the other observes.

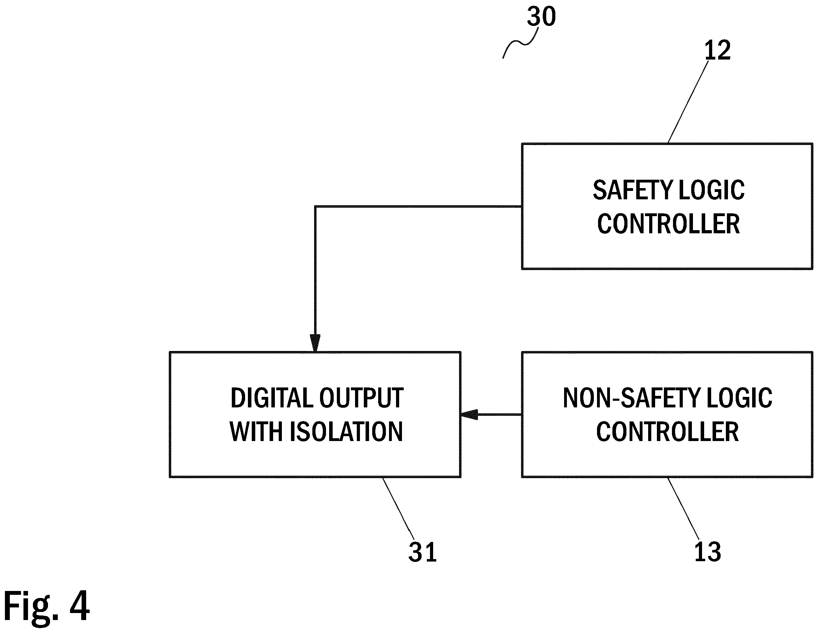

Figure 4 illustrates an embodiment of digital output signalling of an input/output facility arrangement in an electric logic control device according to the present invention. The presented embodiment of digital output signalling of an input/output facility 30 of an electric logic control device comprises a digital output connection with isolation 31. The output signals to said digital output connection with isolation 31 are arranged both from a safety logic controller module 12 and to a non-safety logic controller module 13.

In the presented embodiment the digital output signals from said safety logic controller module 12 and from said non-safety logic controller module 13 are combined with an AND-operator, i.e. are ANDed together. Furthermore, said safety logic controller module 12 and said non-safety logic controller module 13 are configured so that when a port is configured to be used by one of said safety logic controller module 12 and said non-safety logic controller module 13, the other configures the corresponding pin to a 'high' state.

In the presented embodiment, if the output is intended for non-safety related use (NSR), the safety logic controller module 12 considers it unused and drives its respective control to 'high' and ensures that the non-safety logic controller module 13 has the control of the output. Likewise, if the output is intended for safety related use (SR), the non-safety logic controller module 13 considers it unused and drives its respective control to 'high' and ensures that the safety logic controller module 12 has the control of the output. In both cases, if there is a safety related (SR) reason for pulling the signal low, such as e.g. a function request in the safety related safety logic controller module 12, the non-safety related non-safety logic controller module 13 is incapable of disturbing the safety related output signalling.

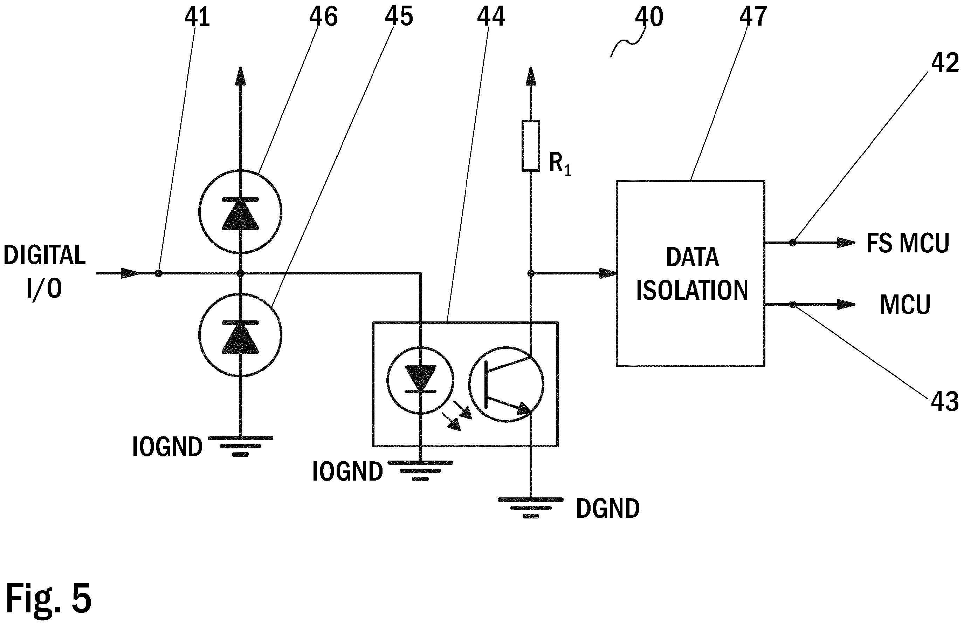

Figure 5 illustrates another embodiment of digital input signalling of an input/output facility arrangement in an electric logic control device according to the present invention. The presented another embodiment of digital input signalling of an input/output facility 40 of an electric logic control device comprises a digital input connection with isolation 41. Said digital input connection with isolation 41 drives the input signal from a digital input/output connection 41 both to the input 42 of a safety logic controller module and to the input 43 of a non-safety logic controller module, i.e. both to the input 42 of an FS MCU and to the input 43 of an MCU. In the presented another embodiment the digital input with isolation 41 is buffered with the help of two diodes 45, 46 connected to the digital input/output connection 41.

Furthermore, in the presented another embodiment of Figure 5, said input/output facility arrangement 40 comprises an isolator 44 as an additional element. In the presented another embodiment said isolator 44 is an additional element providing further isolation. Said input/output facility arrangement 40 also comprises a data isolation block 47 arranged between the input 42 of said safety logic controller module and the input 43 of said non-safety logic controller module. Said data isolation block 47 is configured to isolate the FS MCU input 42 and the MCU input 43 from each other. In the presented another embodiment of Figure 5, the configuration of said data isolation block 47 is carried out so that the buffer is always 'stronger' than the either of the FS MCU input/output or the MCU input/output when observed from the input of the other one of the FS MCU and the MCU. In the presented another embodiment the said data isolation block 47 guarantees that neither of the FS MCU and the MCU can modify the value the other observes. There are several possibilities for configuration of said data isolation block 47. One possible solution for configuration of said data isolation block 47 is using resistors with appropriately selected resistor values before the FS MCU input/output and the MCU input/output. In the presented another embodiment of Figure 5, said input/output facility arrangement 40 also comprises a resistor R₁.

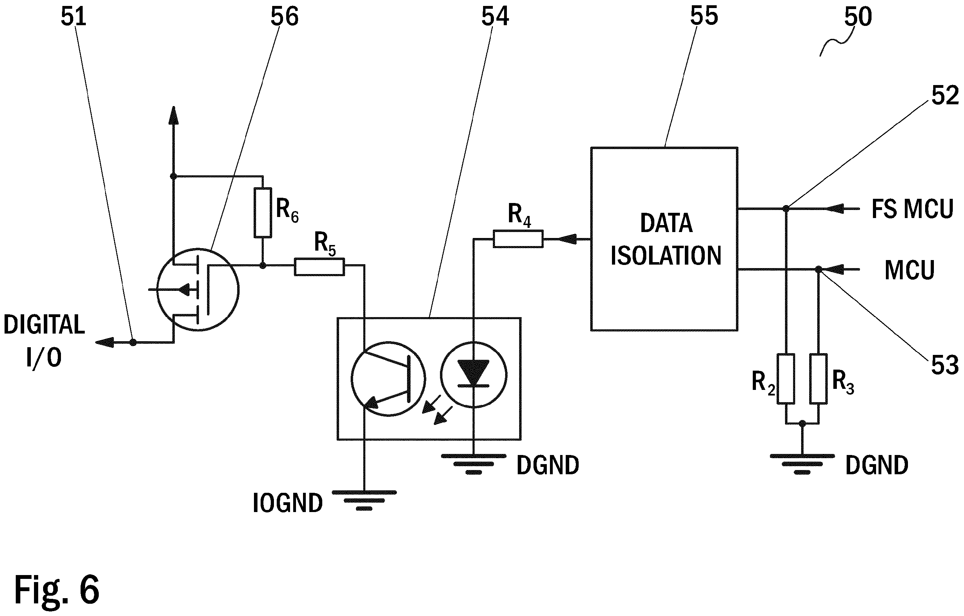

Figure 6 illustrates another embodiment of digital output signalling of an input/output facility arrangement in an electric logic control device according to the present invention. The presented another embodiment of digital output signalling of an input/output facility 50 of an electric logic control device comprises a digital output connection with isolation 51. In the presented another embodiment the output signals to said digital output with isolation 51 are arranged both from the output 52 of a safety logic controller module and from the output 53 of a non-safety logic controller module, i.e. both from the output 52 of an FS MCU and from the output 53 of an MCU. In the presented another embodiment a MOSFET 56 (MOSFET, Metal Oxide Semiconductor Field Effect Transistor) is connected to the digital input/output connection with isolation 51. In an embodiment, said MOSFET 56 may be an enhancement mode p-channel MOSFET.

In the presented embodiment said input/output facility arrangement 50 also comprises a data isolation block 55 arranged between the output 52 of said safety logic controller module and the output 53 of said non-safety logic controller module. Said data isolation block 55 is configured to isolate the FS MCU output 52 and the MCU output 53 from each other. There are several possibilities for configuration of said data isolation block 55. One possible solution for configuration of said data isolation block 55 is that the digital output signals from the FS MCU output 52 and from the MCU output 53 are combined with an AND-operator 55, i.e. said digital output signals are ANDed together. Furthermore, the signalling from said FS MCU output 52 and said MCU output 53 may be configured so that when a port is configured to be used by one of said FS MCU and said MCU, the other configures the corresponding pin to a 'high' state.

Furthermore, in the presented another embodiment of Figure 6, said input/output facility arrangement 50 comprises an isolator 54 as an additional element. In the presented another embodiment said isolator 54 is an additional element providing further isolation. In the presented another embodiment of Figure 6, said input/output facility arrangement 50 also comprises resistors R₂, R₃, R₄, R₅ and R₆.

In the presented embodiment, if the output is intended for non-safety related (NSR) use, the FS MCU considers it unused and drives its respective control to 'high' and ensures that the MCU has the control of the output. Likewise, if the output is intended for safety related (SR) use, the MCU 16 considers it unused and drives its respective control to 'high' and ensures that the FS MCU has the control of the output. In both cases, if there is a safety related (SR) reason for pulling the signal low, such as e.g. a function request in the safety related FS MCU, the non-safety related MCU is incapable of disturbing the safety related output signalling.

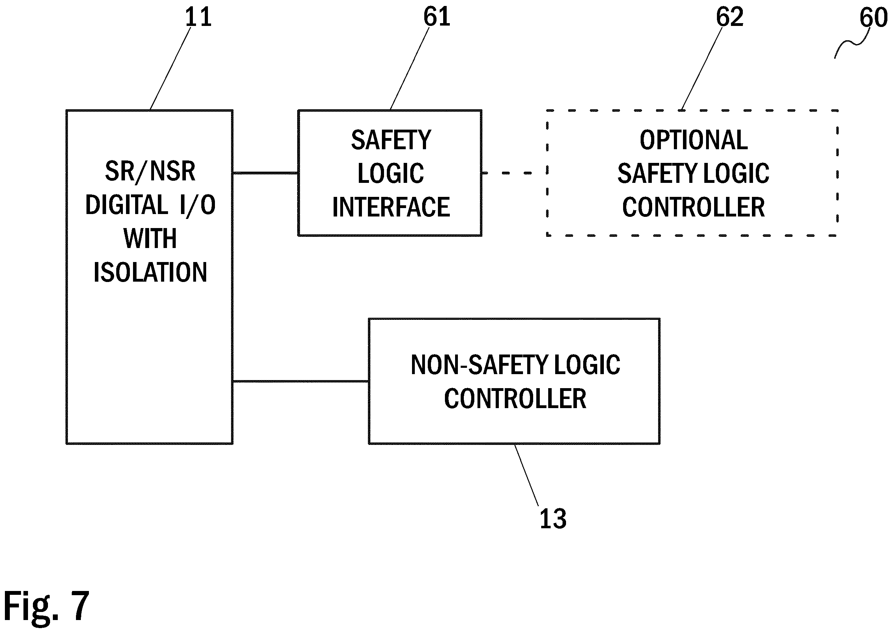

Figure 7 illustrates another embodiment of an input/output facility arrangement in an electric logic control device according to the present invention. The presented another embodiment comprises an input/output facility 60 of an electric logic control device comprising a digital input/output connection with isolation 11 both for the safety related input/output and for the non-safety related input/output. Said input/output facility 60 of an electric logic control device also comprises a safety logic interface 61 and a non-safety logic controller module 13.

In the presented another embodiment, said digital input/output connection with isolation 11 is further connected to said safety logic interface 61. Said digital input/output connection 11 is also further connected to said non-safety logic controller module 13. Said non-safety logic controller module 13 comprises a non-safety logic together with a non-safety level controller, i.e. an MCU (MCU, Microcontroller Unit). In the presented embodiment said input/output facility 60 comprises said non-safety logic controller module 13 as an integrated entity.

In the presented another embodiment said safety logic interface 61 is arranged and configured to receive an optional safety logic controller module 62. Said optional safety logic controller module 62 is arranged and configured to be connected to said safety logic interface 61 and comprises a safety logic together with a safety level controller, i.e. an FS MCU (FS MCU, Functional Safety Microcontroller Unit). Said optional safety logic controller module 62 may be a printed circuit board connectable to said safety logic interface 61.

In the presented another embodiment, when an optional safety logic controller module 62 has been connected to said safety logic interface 61, said digital input/output connection with isolation 11 is also connected to the safety logic of said optional safety logic controller module 62 via said safety logic interface 61. Said optional safety logic controller module 62 provides the safety related electric machine control for the electric machine being controlled by said electric logic control device.

In the presented another embodiment, said digital input/output connection with isolation 11 is also further connected to said non-safety logic controller module 13. Said non-safety logic controller module 13 comprises a non-safety logic together with a non-safety level controller, i.e. an MCU (MCU, Microcontroller Unit).

In said digital input/output connection with isolation 11 the isolation is arranged so that the isolation provides a separation between said non-safety logic controller module 13 and said optional safety logic controller module 62. In said digital input/output connection with isolation 11 the isolation is arranged so that the digital input/output information from said non-safety logic controller module 13 cannot affect the safety logic of said optional safety logic controller module 62. Said non-safety logic controller module 13 provides the non-safety related electric machine control for the electric machine being controlled by said electric logic control device.

The present invention makes it possible to combine the input signals and output signals of safety related and non-safety related signalling in a manner that complies with the standardization.

The present invention also provides improved flexibility of how the input signals in an electric logic control device e.g., in a frequency converter can be allocated.

The present invention also provides more freedom on the design in an electric logic control device and thus reduces required space inside an electric logic control device.

The solution according to the present invention provides an effective and elegant solution for an electric logic control device with an advanced, flexible, and secure input/output facility compared to the current prior art solutions.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

## Claims

1. An input/output facility arrangement (20, 30, 40, 50, 60, 100) in an electric logic control device, said arrangement comprising:
- a digital input/output connection (11, 41, 51) being arranged both for safety related input/output and for non-safety related input/output,
- a non-safety logic controller module (13) connected to and configured to communicate signalling to/from said digital input/output connection (11, 41, 51), said non-safety logic controller module (13) being configured to provide the non-safety related electric machine control (14) for an electric machine being controlled by said electric logic control device, and
- a safety logic controller module (12) or a safety logic interface (61) connected to said digital input/output connection (11, 41, 51), said safety logic interface (61) is configured to receive an optional safety logic controller module (62),
wherein:
- said safety logic controller module (12) or said optional safety logic controller module (62) is configured to communicate signalling to/from said digital input/output connection (11, 41, 51), and configured to provide the safety related electric machine control (14) for an electric machine being controlled by said electric logic control device; and
- said digital input/output connection (11, 41, 51) comprises an isolation between the digital input/output information from said non-safety logic controller module (13) and the digital input/output information from said safety logic controller module (12) or from said optional safety logic controller module (62).

2. An arrangement according to claim 1, comprising an optional safety logic controller module (62) connected to said safety logic interface (61).

3. An arrangement according to claim 1 or claim 2, wherein said isolation comprises an isolator (44, 54).

4. An arrangement according to any of the claims 1 to 3, wherein said digital input/output (11, 41, 51) is buffered.

5. An arrangement according to claim 4, wherein said digital input/output (41) is buffered with the help of two diodes (45, 46) connected to said digital input/output connection (41).

6. An arrangement according to any of the claims 1 to 5, said input/output facility arrangement (20, 30, 40, 50, 60, 100) comprising data isolation (55), wherein the digital output signals from said non-safety logic controller module (13) and from said safety logic controller module (12) or from said optional safety logic controller module (62) are combined with an AND-operator, and
- wherein the signalling from said safety logic controller module (12) and the signalling from said non-safety logic controller module (13) is configured so that when a port is configured to be used by one of said safety logic controller module (12) or said non-safety logic controller module (13), a pin corresponding to said port is configured to a 'high' state by the other of said safety logic controller module (12) or said non-safety logic controller module (13),
or respectively
- wherein the signalling from said optional safety logic controller module (62) and the signalling from said non-safety logic controller module (13) is configured so that when a port is configured to be used by one of said optional safety logic controller module (62) or said non-safety logic controller module (13), a pin corresponding to said port is configured to a 'high' state by the other of said optional safety logic controller module (62) or said non-safety logic controller module (13).

7. An electric logic control device comprising an input/output facility (20, 30, 40, 50, 60, 100) according to any of the claims 1 to 6.

8. An electric logic control device according to claim 7, wherein said electric logic control device is a frequency converter.

9. An optional safety logic controller module (62) being configured to be connected to a safety logic interface (61) of an electric logic control device according to claim 7 or claim 8.

10. An optional safety logic controller module (62) according to claim 9, wherein said electric logic control device is a printed circuit board connectable to said safety logic interface (61).

## Amended claims

### Amended claims in accordance with Rule 137(2) EPC.

1. An input/output facility arrangement (20, 30, 40, 50, 60, 100) in an electric logic control device, said arrangement comprising:
- a digital input/output connection (11, 41, 51) being arranged both for safety related input/output and for non-safety related input/output,
- a non-safety logic controller module (13) connected to and configured to communicate signalling to/from said digital input/output connection (11, 41, 51), said non-safety logic controller module (13) being configured to provide the non-safety related electric machine control (14) for an electric machine being controlled by said electric logic control device,
- a safety logic controller module (12) or a safety logic interface (61) connected to said digital input/output connection (11, 41, 51), said safety logic interface (61) is configured to receive an optional safety logic controller module (62), and
- data isolation (55), wherein the digital output signals from said non-safety logic controller module (13) and from said safety logic controller module (12) or from said optional safety logic controller module (62) are combined with an AND-operator,
wherein:
- said safety logic controller module (12) or said optional safety logic controller module (62) is configured to communicate signalling to/from said digital input/output connection (11, 41, 51), and configured to provide the safety related electric machine control (14) for an electric machine being controlled by said electric logic control device; and
- said digital input/output connection (11, 41, 51) comprises an isolation between the digital input/output information from said non-safety logic controller module (13) and the digital input/output information from said safety logic controller module (12) or from said optional safety logic controller module (62),
and:
- wherein the signalling from said safety logic controller module (12) and the signalling from said non-safety logic controller module (13) is configured so that when a port is configured to be used by one of said safety logic controller module (12) or said non-safety logic controller module (13), a pin corresponding to said port is configured to a 'high' state by the other of said safety logic controller module (12) or said non-safety logic controller module (13),
or respectively
- wherein signalling from said optional safety logic controller module (62) and the signalling from said non-safety logic controller module (13) is configured so that when a port is configured to be used by one of said optional safety logic controller module (62) or said non-safety logic controller module (13), a pin corresponding to said port is configured to a 'high' state by the other of said optional safety logic controller module (62) or said non-safety logic controller module (13).

2. An arrangement according to claim 1, comprising an optional safety logic controller module (62) connected to said safety logic interface (61).

3. An arrangement according to claim 1 or claim 2, wherein said isolation comprises an isolator (44, 54).

4. An arrangement according to any of the claims 1 to 3, wherein said digital input/output (11, 41, 51) is buffered.

5. An arrangement according to claim 4, wherein said digital input/output (41) is buffered with the help of two diodes (45, 46) connected to said digital input/output connection (41).

6. An electric logic control device comprising an input/output facility (20, 30, 40, 50, 60, 100) according to any of the claims 1 to 5.

7. An electric logic control device according to claim 6, wherein said electric logic control device is a frequency converter.

8. An optional safety logic controller module (62) being configured to be connected to a safety logic interface (61) of an electric logic control device according to claim 6 or claim 7.

9. An optional safety logic controller module (62) according to claim 8, wherein said electric logic control device is a printed circuit board connectable to said safety logic interface (61).
